# EUROPEAN PATENT APPLICATION

(11) **EP 1 329 884 A2**
(43) Date of publication of application: **23.07.2003**
(21) Application number: 02258093.0
(22) Date of filing: 25.11.2002
(51) Int. Cl.: G11B 15/43

(54) **Tape deck**

(30) Priority: 17.01.2002 KR 2002002803
(71) Applicant: SAMSUNG ELECTRONICS CO., LTD., Suwon-City, Kyungki-do (KR)
(72) Inventor: Lee, Seung-woo, 542-106 Shinnamooshil, Paldal-gu, Suwon-city, Gyunggi-do (KR); Kim, Bong-joo, Suwon-city, Gyunggi-do (KR); Choi, Do-young, Suwon-city, Gyonggi-do (KR); Sim, Jae-hoon, Suwon-city, Gyonggi-do (KR); Park, Byeng-bae, Dukyang-gu, Goyang-city, Gyunggi-do (KR); Cho, Young-ho, Suwon-city, Gyunggi-do (KR); Oh, Jeong-hyeob, 309-1005 Daewon Apt., Anyang-city, Gyunggi-do (KR); Choi, Hyeong-seok, 250-1404 Hwanggol Maeul, Paldal-gu, Suwon-city, Gyunggi-do (KR)
(74) Representative: Geary, Stuart Lloyd

(57) **Abstract**

The magnetic tape guiding system of a tape recorder transport system has a supply reel pole base assembly (235) having a slant pole (235) with a first guide unit (238) having portions formed at both ends of the slant pole (235) to function as a conventional roller for regulating upward and downward movement of the upper and lower edges of a moving magnetic tape (20), and a tension pole assembly (231) having a tension pole (233) with a second guide unit (234) having portions formed at both ends of the tension pole (233) to function as a conventional impedance roller for regulating upward and downward movement of the upper and lower edges of the moving magnetic tape (20). This arrangement can thus achieve 2-dimensional plane-traveling of the magnetic tape while also reducing the number of the parts of the guiding system

## Description

The present invention relates to a tape deck for a tape recorder or the like, the deck comprising a head drum, a tension pole, a supply-reel-side pole base supporting a slanting pole for guiding tape into contact with the drum for recording and/or playback and means for controlling the transverse movement of a tape on the supply side of said drum during recording and/or playback.

A conventional tape recorders, such as video tape recorders (VTR), digital audio tape (DAT) recorders and camcorders, use a magnetic tape recording medium, which is controlled to follow a predetermined path in the device for recording and playing back of audio and video information.

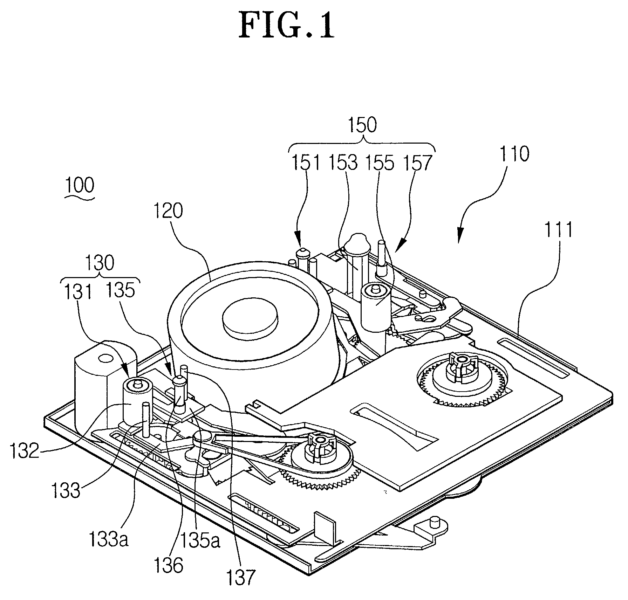

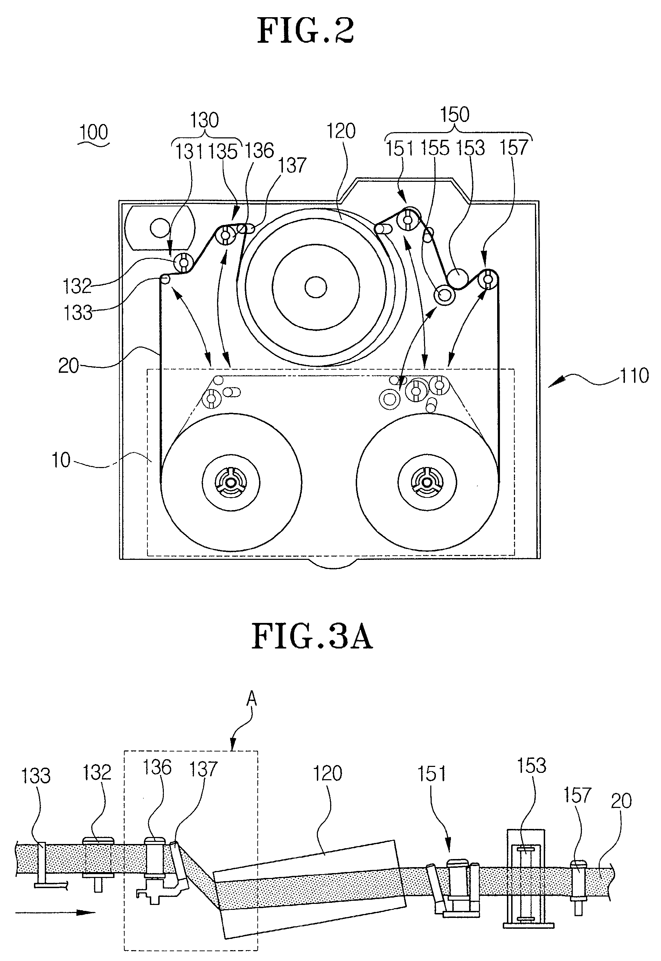

Figures 1 and 2 show the deck and the magnetic tape path of a conventional camcorder. The recording and reproduction of information by the tape recorder 100 is performed while the magnetic tape 20 is in contact with a head drum 120. Therefore, the tape recorder 100 has a magnetic tape transport system including a magnetic tape guiding device for guiding the moving magnetic tape 20 and placing it in contact with the head drum when the tape is loaded, and for separating the magnetic tape 20 from the head drum when the tape is unloaded. The tape recorder 100 further includes a driving means for driving each of the elements of the guiding device.

The magnetic tape transport system includes magnetic tape guiding devices 130 and 150 having a plurality of rollers that are movable to and from predetermined positions on the deck 110 when a tape cassette 10 is being loaded and unloaded, and a fixed pole member. A supply reel magnetic tape guiding device 130 includes a tension pole assembly 131 and a pole base assembly 135. A take-up reel magnetic tape guiding device 150 includes a guide pole assembly 157, a pole base assembly 151, a capstan shaft 153, and a pinch roller 155 for driving the magnetic tape 20 by pressing the magnetic tape 20 against the capstan shaft 153.

The tension pole assembly 131 includes a tension arm 133a that is swung along a predetermined trajectory within the deck 110 when the tape is loaded and unloaded, a tension pole 133 protruding from the front end of the tension arm 133a, and an impedance roller 132 fixed to deck chassis 111. The tension pole 133 applies a predetermined tension to the moving magnetic tape 20, and the impedance roller 132 regulates the up and down movement of the magnetic tape 20 after the tape has passed around the tension pole 133.

The supply reel pole base assembly 135 includes a pole base 135a that is slid along a predetermined trajectory within the deck 110 when the tape is loaded and unloaded, a slant pole 137 protruding from the pole base 135a at an angle, and a guiding roller 136 to regulate the upward and downward movement of the magnetic tape 20 as it advances toward the slant pole 137.

As shown in Figure 3A, in the tape recorder 100, the magnetic tape 20 travels with its upward and downward movement regulated by the guiding roller 136 and the impedance roller 132. In other words, "2-dimensional plane-travelling" of the magnetic tape 20 is achieved, in which the magnetic tape 20 travels without having to change height even though the magnetic tape 20 passes around the head drum 120. Here, the magnetic tape 20 in the dotted-area A of Figure 3A is shown as declining, not because the magnetic tape 20 is declining in height, but because the magnetic tape 20 is advancing toward the head drum 120 that is protruding forwards.

Throughout the years, there have been increasing demands for more compact-sized tape recorders with improved portability and easier handling for the user, which requires a reduction of parts.

However, because the conventional tape recorder 100 must include the impedance roller 132 and the guiding roller 136 to regulate the upward and downward movement of the moving magnetic tape 20, it requires many parts and assembly processes. Therefore, not only is the conventional tape recorder 100 disadvantageous in terms of production cost, it is also disadvantageous because it is difficult to manufacture in a compact size.

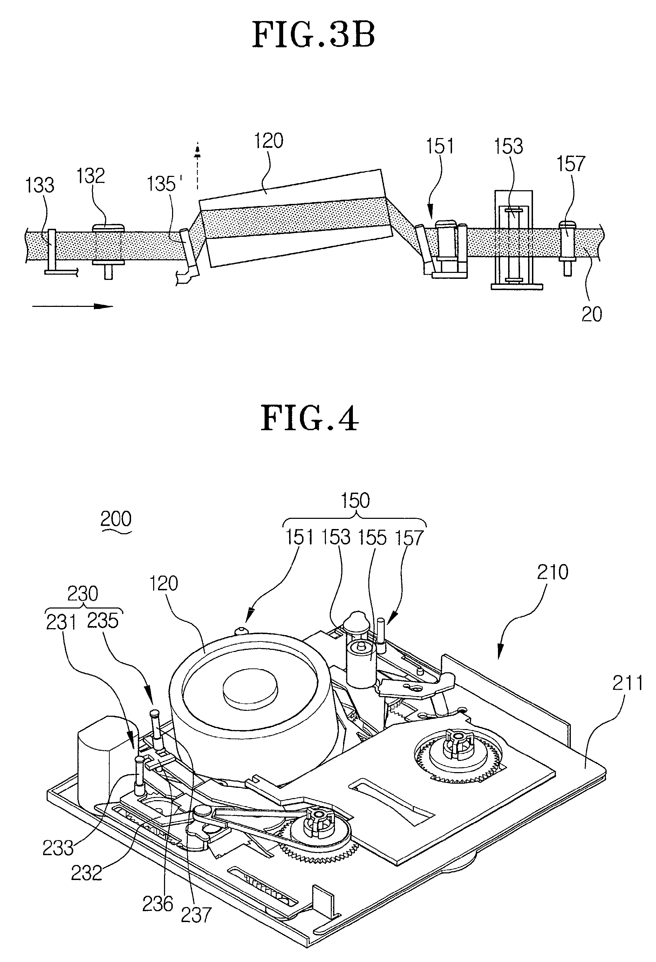

In an attempt to overcome the above shortcomings, a supply reel pole base assembly 135 having only the slant pole 135' and no guiding roller 136 can be used to guide the movement of the magnetic tape 20 as shown in Figure 3B. By eliminating guiding roller 136, this arrangement reduces the number of components in the tape recorder 100. However, this reduction in parts can cause the reliability of the tape recorder 100 to deteriorate because the arrangement may allow the magnetic tape 20 to travels 3-dimensionally. That is, the height of the traveling path can change when the magnetic tape 20 passes around the slant pole 135'. In addition, an element should be disposed to guide the magnetic tape 20 when the 3-dimensional traveling of the magnetic tape 20 occurs.

A tape deck according to the present invention is characterised in that said means for controlling the transverse movement of a tape does not include rollers and comprises guide structures provided on said tension and slanting poles. Thus, the rollers 132, 136 in Figures 1, 2, 3A and 3B can be dispensed with as a result of the provision of the guide structures on the tension and slanting poles.

Preferably, the tension pole comprises an intermediate portion and tapers outwards at either end of said intermediate portion to form a guide structure, the length of the intermediate portion substantially corresponding to the width of the tape for which the deck is adapted.

Preferably, the slanting pole comprises a rod, attached at one end to the pole base and having an enlarged portion at its other end forming a guide structure, the enlarged portion having a guiding surface, facing the pole base, which is parallel to the desired tape path and, optionally, the slanting pole has an enlarged portion where it is attached to the pole base, the enlarged portion having a guiding surface, facing away from the pole base, which is parallel to the desired tape path.

Preferably, the path of a tape from a supply reel to the head drum consists of two guide members only, said guide members being the tension pole and the slanting pole.

Preferably, a deck according to the present invention includes means for receiving a tape cassette and drive means for driving the tension pole and the pole base from retracted to extended positions for withdrawing tape from a cassette, received by the cassette receiving means, into a tape recording and/or playback configuration.

A deck according to the present invention may be employed, *inter alia*, in a video cassette recorder, a digital audio cassette recorder or camcorder.

An embodiment of the present invention will now be described, by way of example, with reference to Figures 4 to 8 of the accompanying drawings, in which:
Figure 1 is a perspective view showing the deck of a conventional camcorder;
Figure 2 is a schematic view showing certain elements of the deck shown in Figure 1;
Figures 3A and 3B are plan views showing examples of conventional magnetic tape guiding devices;
Figure 4 is a perspective view schematically showing the deck of a tape recorder according to an embodiment of the present invention;
Figure 5 is a schematic view showing certain elements of the deck shown in Figure 4;
Figure 6 is a detailed side view schematically showing a portion of a supply reel pole base assembly in Figure 5;
Figure 7 is a detailed perspective view schematically showing a portion of a tension pole assembly in Figure 5; and
Figure 8 is a plan view schematically showing an example of the manner in which the tension pole assembly of the tape transport system in Figure 5 guides the magnetic tape.

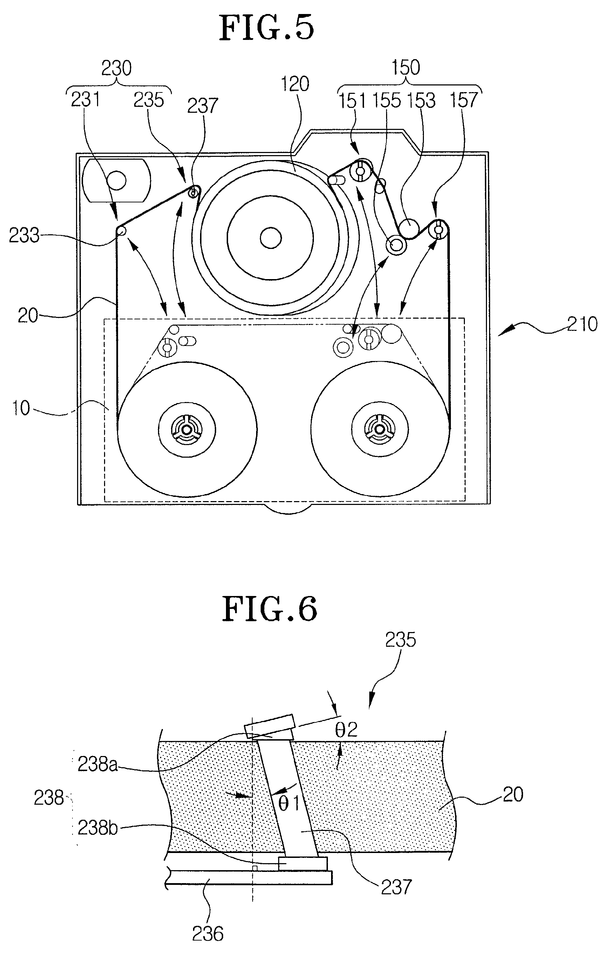

Referring to Figures 4 and 5, a tape recorder 200 has a deck 210 having a magnetic tape transport system including magnetic tape guiding devices 230, 150 and a driving means to drive and move the elements to their positions. The magnetic tape guiding devices 230, 150 include a pair of pole base assemblies 235, 151 for drawing out the magnetic tape 20 from a tape cassette 10 and pushing it into tight contact with a head drum 120 when the tape cassette 10 is being loaded. The magnetic tape guiding device 230 further includes a tension pole assembly 231 for applying a tension force to the magnetic tape 20 by pivoting away from the tape cassette 10 toward the outside edge of the deck 210 when the magnetic tape 20 is drawn out. The take-up reel magnetic tape guiding device 150 has the same structure as the conventional device 150 discussed above, and thus, no further description will be given here.

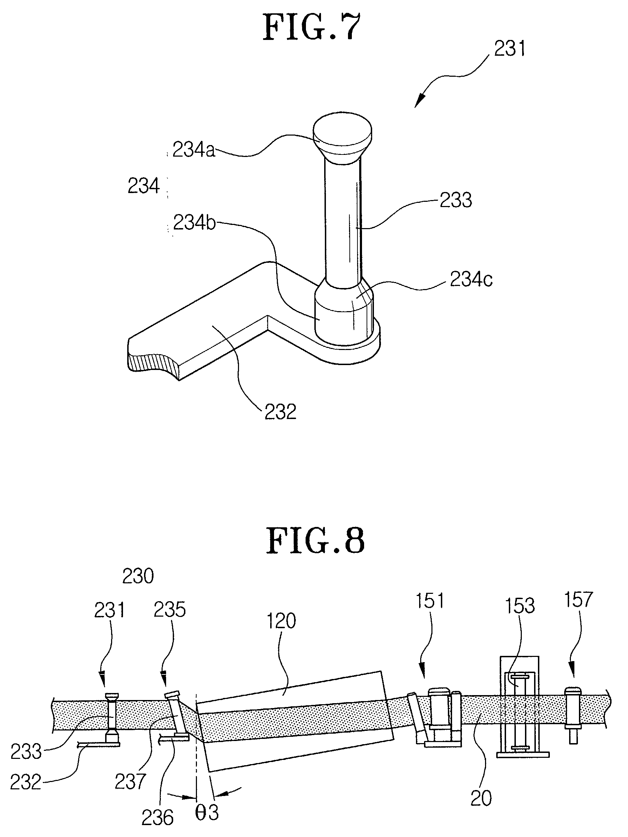

As shown in Figures 6 and 7, the conventional guiding roller 136 and the impedance roller 132 shown in Figures 1 and 2 are replaced by a slant pole 237 included in the supply reel pole base assembly 235 and a tension pole 233 included in the tension pole assembly 231, to achieve 2-dimensional plane-traveling of the magnetic tape 20 in the magnetic tape transport system. Accordingly, even in the absence of the conventional guiding roller 136 and the impedance roller 132 as shown in Figure 1, the magnetic tape 20 travels at a constant or substantially constant distance from the a deck chassis 211 (as shown in Figure 4) without having a change in the height of its travelling path.

More specifically, as shown in Figure 6, the supply reel pole base assembly 235 includes a pole base 236 that is adapted to be slid to a predetermined position on the deck 210 when the tape cassette 10 is loaded, a slant pole 237 protruding from the pole base 236 at a predetermined angle with respect to a line that is perpendicular to an upper face of the pole base 236, and a first guide elements 238 protruding from respective ends of the slant pole 237 and angled to regulate the positions of the upper and lower edges of the moving magnetic tape 20. The first guide unit 238 includes a wedge-shaped guide protrusion 238a protruding from the top of the slant pole 237 and a lower guide protrusion 238b protruding from the bottom of the slant pole 237. The wedge-shaped guide protrusion 238a is formed by increasing the upper external diameter of the slant pole 237. In this arrangement, the lower side of the wedge-shaped guide protrusion 238a guides the upper edge of the magnetic tape 20 traveling in contact with the slant pole 237 at a certain slope with respect to the slant pole 237. In other words, the magnetic tape 20 is guided to be parallel or substantially parallel to the deck chassis 211 at the bottom of the deck 210. Accordingly, the magnetic tape 20 is guided to travel around the head drum 120 at the same or substantially the same height as the travelling path of the magnetic tape 20 in the interval between the tension pole assembly 231 and the supply reel pole base assembly 235. The sloping angle θ2 between the lower side of the wedge-shaped guide protrusion 238a and the upper end of the slant pole 237 is identical or substantially identical to a sloping angle θ1 between the vertical line extended from the pole base 236 and a center axis of the slant pole 237. In addition, it is preferable that the sloping angle θ2 is identical or substantially identical to an installation sloping angle θ3 of the head drum 120 as shown in Figure 8.

It can be further understood that the lower guide protrusion 238b is formed at the lower end of the slant pole 237 with an external diameter larger than that of the slant pole 237, to regulate the movement of lower portion of the magnetic tape 20when the magnetic tape 20 travels around the slant pole 237. Accordingly, the supply reel magnetic tape guiding device 230 can plane-guide the movement of the magnetic tape 20 advancing to the head drum 120 even in the absence of the guide roller 136 as shown in Figure 1 due to the configuration of the first guide unit 238 having the wedge-shaped guide protrusion 238a and a lower guide protrusion 238b at the upper and lower ends, respectively, of the slant pole 237. In other words, the guide roller 136 shown in Figure 1 that is used to regulate the upper and lower side of the magnetic tape 20 in the conventional tape recorder 100 can be omitted by instead using the first guide unit 238 disposed at the slant pole 237 to regulate the upper and the lower edges of the moving magnetic tape 20.

Albeit not shown, the supply reel pole base assembly 235 can include a predetermined sloping side formed between the upper end of the traveling lower guide protrusion 238b and the slant pole 237. Accordingly, when the magnetic tape 20 moves to the lower guide protrusion 238b, the sloping side can return the magnetic tape 20 to its initial position without bending the lower edge of the magnetic tape 20. Also, as long the slant pole 237 is present to regulate movement of the upper and the lower edges of the magnetic tape 20, the supply reel pole base assembly 235 can be modified in various other ways.

Details of the tension pole assembly 231 will now be discussed with regard to Figure 7. The tension pole assembly 231 includes a tension arm 232 that is swung in the direction shown in Figure 5 when the tape is loaded, a tension pole 233 protruding upright from the distal end of the tension arm 232, and a second guide unit 234 comprises features at the upper and lower ends of the tension pole 233 in order to regulate the upper and the lower edges of the magnetic tape 20. The second guide unit 234 includes first and second guide flanges 234a, 234b formed at opposite ends of the tension pole 233 and having increased external diameters as shown. The upward and downward movement of the magnetic tape 20 moving in contact with the tension pole 233 is regulated by the second guide unit 234, and thus, the conventional impedance roller 132 as shown in Figure 1 can be omitted. In other words, because the tension pole 233 can perform the functions of the conventional tension pole 133 as shown in Figure 1 and the impedance roller, the impedance roller is not necessary.

In addition, a tapering portion 234c, having a predetermined slope, is formed between each guide flange 234a, 234b and the middle part of the tension pole 233. Accordingly, even through the magnetic tape 20 can have a tendency to move up and down due to an abnormal movement, the tapering portions 234c can return the magnetic tape 20 to its initial position. Furthermore, as long as the tension pole 233 exists to limit the upward and downward movement of the magnetic tape 20 when the magnetic tape 20 travels, the supply reel tension pole assembly 231 can be modified in various way as can be appreciated by one skilled in the art.

Referring to Figure 8, it can be easily seen that the magnetic tape 20 travels such that 2-dimensional plane-traveling is ensured as in the conventional system discussed above. As explained above with regard to the illustration in Figure 3A, the portion of the magnetic tape 20 between the slant pole 237 and the head drum 120 is not actually declining in height, but is advancing toward the head drum 120 that is protruding frontward.

The magnetic tape transport system of the tape recorder 200 described above can be employed in a video camcorder, as well as in a video tape recorder (VCR) and a digital audio tape (DAT) tape recorder having a deck mechanism.

In the embodiments of the present invention described above, the number of the parts of the magnetic tape transport system, especially in the supply reel pole base assembly 235 and the tension pole assembly 231, are reduced, while still achieving secured plane-movement of the magnetic tape 20. In other words, the fixing poles 237, 233 enable the magnetic tape 20 to plane-travel as does the conventional magnetic tape without requiring the two rollers 132 and 136 of the conventional supply reel magnetic tape guiding device 130 as shown in Figure 1.

As the elements are reduced, the manufacturing process of the tape recorder 200 is simplified. In addition, the production cost is also reduced, and a smaller tape recorder 200 can be produced.

## Claims

1. A tape deck for a tape recorder or the like, the deck (210) comprising a head drum (120), a tension pole (233), a supply-reel-side pole base (236) supporting a slanting pole (235) for guiding tape (20) into contact with the drum (120) for recording and/or playback and means (234, 238) for controlling the transverse movement of a tape (20) on the supply side of said drum during recording and/or playback, **characterised in that** said means for controlling the transverse movement of a tape does not include rollers and comprises guide structures (234, 239) provided on said tension and slanting poles (233, 235).

2. A tape deck according to claim 1, wherein the tension pole (233) comprises an intermediate portion and tapers outwards at either end of said intermediate portion to form a guide structure (234), the length of the intermediate portion substantially corresponding to the width of the tape (20) for which the deck is adapted.

3. A tape deck according to claim 1 or 2, wherein the slanting pole (235) comprises a rod (237), attached at one end to the pole base (236) and having an enlarged portion (238a) at its other end forming a guide structure, the enlarged portion (238a) having a guiding surface, facing the pole base (236), which is parallel to the desired tape path.

4. A tape deck according to claim 3, wherein the slanting pole (235) has an enlarged portion (238b) where it is attached to the pole base (236), the enlarged portion (238b) having a guiding surface, facing away from the pole base (236), which is parallel to the desired tape path.

5. A tape deck according to any preceding claim, wherein the path of a tape from a supply reel to the head drum (120) consists of two guide members only, said guide members being the tension pole (233) and the slanting pole (235).

6. A tape deck according to any preceding claim, including means for receiving a tape cassette (10) and drive means for driving the tension pole (133) and the pole base (236) from retracted to extended positions for withdrawing tape (20) from a cassette (10), received by the cassette receiving means, into a tape recording and/or playback configuration.

7. A video cassette recorder including a deck according to any preceding claim.

8. An digital audio cassette recorder including a deck according to any preceding claim.

9. A camcorder including a deck according to any preceding claim.

10. A magnetic tape guiding device for a transport system of a tape recorder, comprising a pair of pole base assemblies adapted to draw out a magnetic tape and push the magnetic tape to a tight contact with a head drum when a cassette tape is loaded, the magnetic tape guiding device comprising:
a tension pole assembly, adapted to apply a tension force to the magnetic tape by pivoting toward an outside edge of a deck of the transport system when the magnetic tape is drawn out; and
a supply reel pole base assembly, included in one of the pair of pole base assemblies, and comprising a pole base movably disposed on the deck to be slid when the magnetic tape is drawn out, and a slant pole having a first guide unit including a portion angled with respect to the pole base to regulate traveling height by contacting an upper edge and a lower edge of the moving magnetic tape;
the tension pole assembly comprises a tension arm disposed in the deck to pivot when the magnetic tape is drawn out, and a second guide unit extending upright at a front end of the tension arm to regulate traveling height by contacting the upper edge and the lower edge of the moving magnetic tape, and
the magnetic tape travels at a predetermined distance from a surface of the deck as the traveling height is regulated by the tension pole assembly and the pole base assembly.

11. The magnetic tape guiding device of claim 10, wherein the first guide unit includes:
a sloping guide protrusion disposed at an upper end of the slant pole with an external diameter larger than that of the slant pole, and having a lower side that is substantially parallel to a surface of the deck and which extends at a predetermined sloping angle with respect to an upper end of the slant pole; and
a lower guide protrusion, formed at a lower end of the slant pole and having an external diameter larger than that of the slant pole, and being adapted to regulate a lower direction movement of a lower edge of the magnetic tape.

12. The magnetic tape guiding device of claim 11, wherein the predetermined sloping angle θ2 is substantially identical to a sloping angle θ1 between a vertical line extended from the pole base and a center axis of the slant pole.

13. The magnetic tape guiding device of claim 10, wherein the second guide unit includes a respective guide flange formed at each end of the tension pole with an external diameter larger than that of the tension pole.

14. The magnetic tape guiding device of claim 13, wherein the second guide unit includes a sloping side formed between each said guide flange and the tension pole.
